(19) Europäisches Patentamt
European Patent Office
Office européen des brevets

(11) **EP 3 798 696 A1**

(12) **DEMANDE DE BREVET EUROPEEN**

(43) Date de publication:
**31.03.2021 Bulletin 2021/13**

(51) Int Cl.:
*G02B 5/02* (2006.01)  *B82Y 20/00* (2011.01)

(21) Numéro de dépôt: **20198214.7**

(22) Date de dépôt: **24.09.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **27.09.2019 FR 1910729**

(71) Demandeur: **COMMISSARIAT À L'ÉNERGIE ATOMIQUE ET AUX ÉNERGIES ALTERNATIVES 75015 Paris (FR)**

(72) Inventeurs:
• BOUTAMI, Salim
  38100 GRENOBLE (FR)
• TEMPLIER, François
  38054 GRENOBLE (FR)
• AVENTURIER, Bernard
  38054 GRENOBLE (FR)

(74) Mandataire: **Hautier, Nicolas
Cabinet Hautier
20, rue de la Liberté
06000 Nice (FR)**

(54) **STRUCTURE DIFFUSIVE POUR SOURCE DE LUMIÈRE**

(57) L'invention concerne un diffuseur 3 destiné à recevoir de la lumière émise par une source de lumière 1 visible comprenant une couche de transmission 10 et une couche de diffusion 22 destinée à diffuser ladite lumière, le diffuseur étant caractérisé en ce que la couche de diffusion comprend une pluralité de nanostructures métalliques 200, chacune de ces nanostructures métalliques présentant, en projection dans un plan d'extension principal xy, une dimension longitudinale L selon un axe longitudinal et une dimension transverse $\ell$ selon un axe transverse, lesdites dimensions longitudinales et transverses étant différentes entre elles et la dimension transverse $\ell$ étant inférieure à 650 nm, et en ce que ces nanostructures métalliques sont en outre réparties au sein de la couche de diffusion de sorte qu'au moins deux nanostructures métalliques adjacentes sont respectivement orientées selon deux axes longitudinaux non parallèles.

L'invention concerne également un procédé de fabrication d'un tel diffuseur, et un système d'affichage comprenant un tel diffuseur.

FIG. 4I

EP 3 798 696 A1

**Description**

DOMAINE TECHNIQUE

L'invention concerne le domaine de l'optique. Elle trouve pour application particulièrement avantageuse l'amélioration de la diffusivité de sources de lumière pixellisées telles que des diodes électroluminescentes (LED).

ÉTAT DE LA TECHNIQUE

Une source de lumière peut être étendue ou ponctuelle.

Une source de lumière ponctuelle, également dénommée source de lumière pixellisée, peut être utilisée dans des systèmes de visualisation ou d'affichage. En particulier, une pluralité de sources de lumière ponctuelles adjacentes permet de former des pixels d'un écran. Une telle source de lumière ponctuelle peut présenter des dimensions de l'ordre de quelques dizaines de microns. Les diodes électroluminescentes (LED) peuvent avantageusement former ces sources de lumière ponctuelles.

Une LED présente généralement un angle d'émission relativement restreint. Elle se caractérise par une directivité élevée.

Dans certaines applications cependant, il peut être nécessaire d'avoir une source de lumière ponctuelle présentant une faible directivité, avec un grand angle d'émission. C'est le cas pour des écrans d'affichage 3D par exemple.

Une solution pour rendre une LED peu directive consiste à ajouter une structure diffusive à la LED, de façon à diffuser la lumière émise par la LED dans toutes les directions.

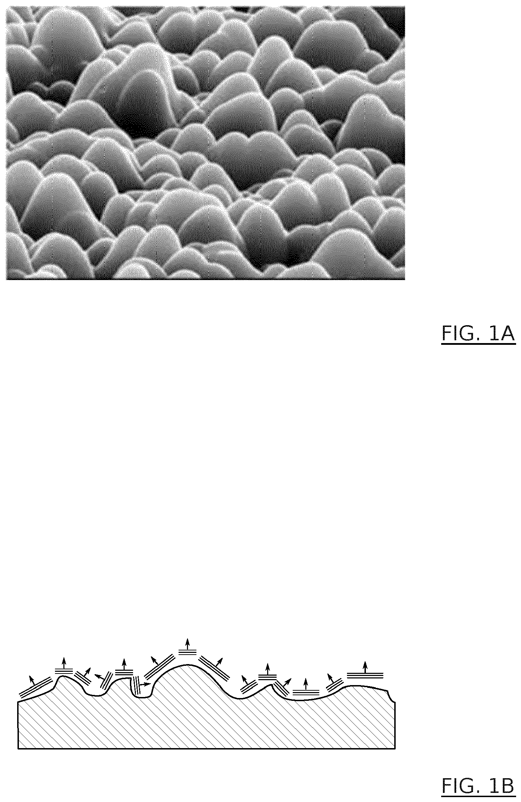

De façon connue, une telle structure diffusive peut se présenter sous forme d'un film diffuseur diélectrique comprenant des corrugations diélectriques aléatoires (figure 1A). Les pseudo-périodes et/ou les dimensions de ces corrugations peuvent atteindre plusieurs microns, voire plusieurs dizaines de microns (figure 1A). Elles sont notamment plus grandes que la longueur d'onde d'émission de la LED.

Le fonctionnement d'un tel film diffuseur diélectrique n'est donc pas directement basé sur un phénomène de diffusion de la lumière. Le film diffuseur diélectrique génère dans ce cas de multiples réfractions de la lumière sur les surfaces d'inclinaisons différentes des corrugations, tel qu'illustré à la figure 1B. La lumière est donc réfractée par le film diffuseur, dit film diffuseur réfractif, dans une multitude de directions différentes.

Ce phénomène de réfraction de la lumière statistiquement dans toutes les directions reproduit, par effet de moyennage, un phénomène de diffusion isotrope. Ce type de film diffuseur réfractif fonctionne très bien pour des sources de lumière étendues.

Cependant, pour des sources de lumière pixélisées, en particulier pour des sources pixellisées dont les dimensions sont inférieures ou égales à 15μm, ce type de film diffuseur réfractif ne permet pas de reproduire un phénomène de diffusion isotrope pour chacune des sources.

De telles sources pixellisées agencées en regard de ce type de film diffuseur réfractif ne sont plus associées chacune à une multitude de corrugations.

L'effet de moyennage obtenu avec une source étendue n'est donc plus obtenu avec une source ponctuelle. Dans ce cas, la lumière émise par une source ponctuelle est réfractée dans un nombre limité de directions, voire dans une seule direction. Le phénomène de diffusion n'est donc pas bien reproduit. Cette réfraction est même particulièrement anisotrope. La source ponctuelle, par exemple une LED formant un pixel d'un écran d'affichage, reste très directive avec ce type de film diffuseur réfractif.

Dans ce cas, la ou les directions de réfraction varient en outre d'un pixel à un autre. Pour un écran dont les pixels sont des LED émettant toutes une lumière de même intensité lumineuse, des variations d'intensité lumineuse dues au film diffuseur réfractif peuvent donc être perçues sur l'écran, selon la direction d'observation. Le film diffuseur réfractif ne permet pas d'obtenir une diffusion isotrope de la lumière émise par une source ponctuelle.

La présente invention vise à pallier au moins partiellement certains des inconvénients mentionnés ci-dessus.

Un objet de la présente invention est de proposer une solution permettant d'optimiser la diffusion de la lumière émise par une source de lumière, en particulier par une source de lumière ponctuelle.

Un autre objet de la présente invention est de proposer une solution permettant d'améliorer l'isotropie de la diffusion.

Les autres objets, caractéristiques et avantages de la présente invention apparaîtront à l'examen de la description suivante et des dessins d'accompagnement. Il est entendu que d'autres avantages peuvent être incorporés.

RÉSUMÉ

Pour atteindre les objectifs mentionnés ci-dessus, la présente invention prévoit selon un premier aspect un diffuseur destiné à recevoir de la lumière émise par une source de lumière visible, ledit diffuseur comprenant une couche de transmission et une couche de diffusion, de préférence supportée par la couche de transmission, et destinée à diffuser la lumière émise par la source de lumière.

Avantageusement, la couche de diffusion comprend une pluralité de nanostructures métalliques.

Ces nanostructures métalliques présentent chacune, en projection dans un plan d'extension principal :

- une dimension longitudinale correspondant à la plus grande dimension de la nanostructure métallique selon cette projection, la dimension longitudinale s'étendant selon un axe longitudinal et,
- une dimension transverse prise selon un axe transverse perpendiculaire à l'axe longitudinal, la dimension transverse étant inférieure à la dimension longitudinale et étant inférieure à 650 nm.

Ces nanostructures métalliques sont en outre réparties au sein de la couche de diffusion de sorte que les axes longitudinaux d'au moins deux nanostructures métalliques adjacentes sont non parallèles entre eux.

L'axe longitudinal de la nanostructure est dénommé grand axe et l'axe transverse de la nanostructure est dénommé petit axe.

Ainsi le diffuseur selon l'invention comprend une pluralité de nanostructures présentant chacune au moins une dimension - la dimension transverse - inférieure à 650 nm, de préférence inférieure à 500 nm et de préférence inférieure à 400 nm. Cette dimension transverse est donc inférieure à au moins une partie du spectre de longueurs d'onde de la lumière visible. Cela permet d'obtenir un phénomène de diffusion de cette lumière, contrairement au diffuseur réfractif présenté plus haut.

Par ailleurs, ces nanostructures sont en un matériau métallique. Un tel matériau métallique présente notamment un indice de réfraction au moins deux fois supérieur à celui de la couche de transmission transparente à la lumière émise. Cela permet d'obtenir un phénomène de diffusion significatif, contrairement au diffuseur réfractif présenté plus haut. L'efficacité de la diffusion est améliorée.

Les nanostructures forment de préférence une simple couche de particules sur la couche de transmission. La lumière qui traverse cette simple couche en incidence normale ou quasi-normale est ainsi faiblement atténuée. La quasi-totalité de la lumière incidente peut ainsi être efficacement diffusée.

Par ailleurs, ces nanostructures, en particulier les nanostructures adjacentes, présentent entre elles des orientations différentes. Cela permet d'éviter une diffusion de la lumière selon une direction privilégiée par effet de réseau. Cela permet d'améliorer l'isotropie de la diffusion. Les nanostructures sont de préférence orientées de façon aléatoire ou désordonnée.

Ainsi, la présente invention prévoit d'intégrer dans la couche de diffusion des nanostructures métalliques permettant non seulement de diffuser la lumière, mais de rendre une telle diffusion efficace et isotrope.

Les développements menés dans le cadre de la présente invention ont montré que la combinaison des caractéristiques de ces nanostructures permettait d'obtenir un effet synergique, conduisant à une diffusion optimisée, en particulier pour des sources de lumière ponctuelles ou pixellisées.

Un deuxième aspect de la présente invention concerne un procédé de fabrication d'un diffuseur comprenant au moins une couche de diffusion destinée à diffuser une lumière émise par une source de lumière visible et comprenant une pluralité de nanostructures métalliques.

Ce procédé comprend les étapes suivantes :

- Fournir une couche de transmission en un matériau transparent à la lumière émise, et présentant une face avant,
- Former sur la face avant une pluralité de nanostructures métalliques, chacune de ces nanostructures métalliques présentant, en projection dans un plan d'extension principal parallèle à la couche de diffusion, une dimension longitudinale selon un axe longitudinal et une dimension transverse selon un axe transverse, lesdites dimensions longitudinales et transverses étant différentes entre elles et la dimension transverse étant inférieure à 650 nm, les nanostructures métalliques étant en outre réparties au sein de la couche de diffusion de sorte qu'au moins deux nanostructures métalliques adjacentes sont respectivement orientées selon deux axes longitudinaux non parallèles.

Un troisième aspect de la présente invention concerne un système comprenant au moins un diffuseur selon l'invention et au moins une source de lumière pixellisée, agencés l'un à l'autre. L'au moins un diffuseur est configuré pour coopérer avec l'au moins une source de lumière ponctuelle de façon à diffuser une lumière émise par celle-ci.

Un tel système peut avantageusement être utilisé pour la réalisation d'écran d'affichage, en particulier pour des écrans 3D.

BRÈVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :

- La FIGURE 1A est une image par microscopie électronique à balayage d'un film diffuseur diélectrique selon l'art antérieur.
- La FIGURE 1B illustre schématiquement en coupe un fonctionnement du film diffuseur diélectrique de la figure 1A.
- La FIGURE 2A illustre schématiquement en coupe transverse un diffuseur comprenant une couche de diffusion, une couche de transmission et une couche de polarisation selon un mode de réalisation non limitatif de la présente invention.
- La FIGURE 2B illustre schématiquement en vue de dessus une couche de diffusion d'un diffuseur selon un mode de réalisation de la présente invention.
- La FIGURE 3A illustre schématiquement en coupe transverse une première configuration d'un cristal liquide.

- La FIGURE 3B illustre schématiquement en coupe transverse une deuxième configuration d'un cristal liquide.

- Les FIGURES 4A à 4I illustrent schématiquement des étapes de formation d'un diffuseur comprenant une couche de diffusion à base d'une pluralité de nanostructures métalliques, une couche de transmission, une couche de polarisation à base de cristaux liquides, selon un mode de réalisation de l'invention.

- La FIGURE 5 montre un agencement d'un diffuseur à une pluralité de LED, selon un mode de réalisation de l'invention.

- La FIGURE 6 montre un système configuré pour un affichage 3D comprenant un écran haute résolution associé à une matrice de microlentilles.

- La FIGURE 7 montre un système configuré pour un affichage 3D comprenant une pluralité de micro-écrans associée à une pluralité de systèmes de projection et à au moins un diffuseur, et une matrice de microlentilles.

- La FIGURE 8 montre un système de projection du système d'affichage 3D illustré à la figure 7, selon un mode de réalisation.

- La FIGURE 9 montre un dimensionnement d'une partie du système d'affichage 3D illustré à la figure 7.

- La FIGURE 10 montre le système d'affichage 3D illustré à la figure 7, comprenant au moins un diffuseur selon un mode de réalisation non limitatif de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions des différentes couches et structures des diffuseurs ne sont pas représentatives de la réalité.

DESCRIPTION DÉTAILLÉE

Avant d'entamer une revue détaillée de modes de réalisation de l'invention, il est rappelé que l'invention selon son premier aspect comprend notamment les caractéristiques optionnelles ci-après pouvant être utilisées en association ou alternativement.

Selon un exemple, les axes longitudinaux des nanostructures métalliques sont orientés selon une pluralité d'orientations longitudinales différentes dans le plan d'extension principal.

Selon un exemple, les dimensions longitudinale L et transverse I sont telles que $L \geq k * I$, avec k = 1.5 et de préférence k=2 et de préférence k=3.

Selon un exemple, pour au moins certaines des nanostructures métalliques adjacentes, les axes longitudinaux de ces nanostructures métalliques adjacentes forment un angle $\alpha$ d'au moins 40° et de préférence d'au moins 60°.

Selon un exemple, pour une nanostructure métallique donnée, au moins plusieurs nanostructures adjacentes à ladite nanostructure donnée présentent un axe longitudinal non parallèle à celui de ladite nanostructure donnée.

Selon un exemple, le diffuseur comprend en outre une couche de polarisation configurée pour polariser la lumière émise par la source et destinée à être diffusée par la pluralité de nanostructures métalliques.

Selon un exemple, la couche de polarisation comprend un polariseur.

Selon un exemple, la couche de polarisation comprend un cristal liquide.

Selon un exemple, la couche de polarisation est configurée pour moduler dynamiquement la polarisation de la lumière émise selon une fréquence de modulation.

Selon un exemple, la fréquence de modulation est comprise entre 20Hz et 200Hz.

Selon un exemple, la dimension longitudinale est comprise entre 200 nm et 2 $\mu$m, et la dimension trans-verse est comprise entre 50 nm et 500 nm.

Selon un exemple, les nanostructures métalliques présentent, en projection dans le plan d'extension principal, une forme prise parmi une ellipse et un rectangle.

Selon un exemple, les nanostructures métalliques présentent toutes la même forme.

Selon un exemple, le diffuseur présente dans le plan d'extension principal une dimension d'extension principale D comprise entre 5 $\mu$m et 30 $\mu$m.

Selon un exemple, les nanostructures métalliques présentent un indice de réfraction au moins deux fois supérieur à celui de la couche de transmission.

Selon un exemple, la couche de diffusion présente une épaisseur h comprise entre 100 nm et 500 nm.

Selon un exemple, au moins une partie des nanostructures métalliques est en au moins un métal pris parmi l'aluminium, le tungstène, le cuivre, l'argent, l'or.

L'invention selon son deuxième aspect comprend notamment les caractéristiques optionnelles ci-après pouvant être utilisées en association ou alternativement :

Selon un exemple, le procédé comprend en outre une étape de dépôt sur la pluralité de nanostructures métalliques d'un matériau transparent à la lumière émise et enveloppant les nanostructures métalliques. Selon un exemple, le procédé comprend en outre une étape de planarisation de la couche de diffusion, configurée pour former une couche de diffusion composite comprenant le matériau transparent enveloppant les nanostructures métalliques.

Selon un exemple, le procédé comprend en outre la formation d'une couche de polarisation s'étendant sur une face arrière de la couche de transmission, ladite couche de polarisation étant configurée pour polariser la lumière émise par la source et destinée à être diffusée par les nanostructures métalliques.

Selon un exemple, la formation de la couche de polarisation comprend une formation d'une cavité et un remplissage de ladite cavité par un cristal liquide.

Selon un exemple, le procédé comprend en outre la formation d'électrodes autour de la cavité, lesdites électrodes étant configurées pour appliquer un champ électrique au cristal liquide et pour connecter électriquement la couche de polarisation à un système de modulation configuré pour coopérer avec le diffuseur afin de moduler dynamiquement la polarisation de la lumière polarisée par la couche de polarisation, selon une fréquence de modulation.

Selon un exemple, le système d'affichage comprend :

- un écran, de préférence à très haute résolution, comprenant une pluralité de micro-écrans comprenant chacun une pluralité de pixels,
- une pluralité de systèmes de projection associée à la pluralité de micro-écrans,
- au moins un diffuseur associé à au moins un pixel des pluralités de pixels des micro-écrans, et
- une matrice de microlentilles associée à l'au moins un diffuseur.

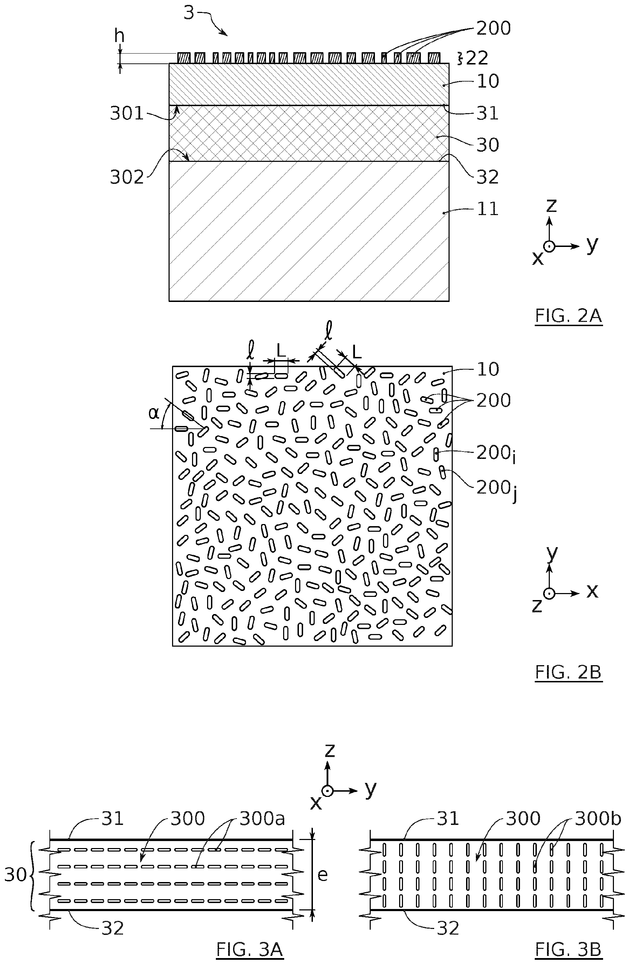

Dans la présente demande de brevet, il est fait référence à un plan d'extension principal. Ce plan d'extension principal est le plan xy du repère orthonormé illustré sur les figures 2A, 2B, 3B et 4A notamment.

Dans la présente demande de brevet, on parlera préférentiellement d'épaisseur pour une couche et de hauteur pour un dispositif. L'épaisseur et la hauteur sont prises selon une direction z normale au plan d'extension principal.

Le terme nanostructure désigne en particulier un objet solide dont au moins une dimension est nanométrique, c'est-à-dire strictement inférieure à 1 $\mu$m. Dans le cadre de l'invention les nanostructures présentent chacune au moins une dimension nanométrique dans le plan d'extension principal inférieure à quelques centaines de nanomètres, soit de préférence inférieure à une longueur d'onde d'intérêt de la lumière émise.

Dans le cadre de l'invention, les nanostructures présentent un petit axe et un grand axe, en projection dans le plan d'extension principal, et sont orientées longitudinalement selon leur grand axe.

Dans le cadre de l'invention, les nanostructures présentent des orientations variées. Cela signifie que les nanostructures ne sont pas toutes dirigées selon une même direction, ou selon quelques directions privilégiées seulement. Ainsi, leurs grands axes s'étendent selon des directions différentes.

Dans la présente invention, le diffuseur est en particulier destiné à être agencé avec des sources de lumières ponctuelles, en particulier des LED.

Une source de lumière ponctuelle s'entend d'une source présentant des dimensions en projection dans le plan d'extension principal inférieures à quelques dizaines de microns, en particulier inférieures à 30 $\mu$m, et de préférence inférieures ou égales à 15 $\mu$m.

L'invention peut cependant être mise en œuvre plus largement pour différentes sources de lumière, par exemple des sources étendues.

Les sources de lumière ponctuelles ou étendues peuvent être polychromatiques ou monochromatiques. La lumière émise par ces sources est de préférence une lumière visible.

Dans le cas d'une source polychromatique, la longueur d'onde d'intérêt de la lumière émise par cette source peut être la plus petite longueur d'onde émise par la source. Elle peut éventuellement être la plus petite longueur d'onde émise par la source et reçue par la couche de diffusion, dans le cas où un élément intermédiaire entre la source et la couche de diffusion (par exemple un filtre ou la couche de transmission elle-même) filtre une partie de cette lumière, intentionnellement ou non. Elle peut également s'entendre d'une gamme de longueurs d'ondes de quelques dizaines de nanomètres, par exemple de l'ordre de 100nm ou moins.

Dans le cas d'une source monochromatique ou quasi-monochromatique, la longueur d'onde d'intérêt est l'unique longueur d'onde émise par cette source ou la longueur d'onde principalement émise par cette source.

Sauf mention explicite, il est précisé que, dans le cadre de la présente invention, la disposition relative d'une troisième couche intercalée entre une première couche et une deuxième couche, ne signifie pas obligatoirement que les couches sont directement au contact les unes des autres, mais signifie que la troisième couche est soit directement au contact des première et deuxième couches, soit séparée de celles-ci par au moins une autre couche ou au moins un autre élément.

Les étapes de formation des différentes couches et régions s'entendent au sens large : elles peuvent être réalisées en plusieurs sous-étapes qui ne sont pas forcément strictement successives.

On entend par un substrat, une couche, un dispositif, « à base » d'un matériau M, un substrat, une couche, un dispositif comprenant ce matériau M uniquement ou ce matériau M et éventuellement d'autres matériaux, par exemple des éléments d'alliage, des impuretés ou des éléments dopants. Ainsi, une couche de diffusion à base de nanostructures métalliques peut par exemple comprendre des nanostructures en tungstène (W) ou des nanostructures en tungstène (W) et en aluminium (Al), ou encore des nanostructures en tungstène (W) et un matériau d'encapsulation transparent.

On entend par une couche ou un matériau « transparent à la lumière émise ou à la longueur d'onde d'intérêt » ou simplement « transparent » une couche ou un matériau laissant passer au moins 90% de l'intensité lumineuse de la lumière présentant cette longueur d'onde d'intérêt.

Les termes « sensiblement », « environ », « de l'ordre de » signifient « à 10% près » ou, lorsqu'il s'agit d'une orientation angulaire, « à 10° près ». Ainsi, une direction sensiblement normale à un plan signifie une direction présentant un angle de 90±10° par rapport au plan.

Pour déterminer la géométrie du diffuseur et les compositions des différentes couches, on peut procéder à des analyses de microscopie optique ou de Microscopie Electronique à Balayage (MEB).

Les compositions chimiques des différentes couches ou régions peuvent être déterminées à l'aide de la méthode bien connue EDX ou X-EDS, acronyme de « energy dispersive x-ray spectroscopy » qui signifie « analyse dispersive en énergie de photons X ».

Cette méthode est bien adaptée pour analyser la composition de structures de petites tailles telles que des nanostructures métalliques. Elle peut être mise en œuvre sur des coupes métallurgiques au sein d'un Microscope Electronique à Balayage (MEB).

Ces techniques permettent notamment de déterminer si le diffuseur comprend une couche de diffusion comprenant des nanostructures métalliques, telle que décrite dans la présente invention. En outre, il pourrait être possible de constater que les nanostructures métalliques présentent des grands axes et des petits axes. Par ailleurs, il pourrait être possible de constater que les nanostructures métalliques s'étendent selon des directions variées et non pas parallèles les unes aux autres. Naturellement, d'autres approches seront envisageables pour déterminer si un diffuseur, un dispositif optoélectronique ou un procédé reproduisent les caractéristiques couvertes par les revendications.

Un microscope optique polarisant peut en outre permettre de mettre en évidence une couche de polarisation telle que décrite dans la présente invention.

Un mode de réalisation préféré d'un diffuseur selon l'invention va maintenant être décrit en référence aux figures 2A, 2B.

Selon ce mode de réalisation, le diffuseur 3 comprend une couche de diffusion 22 surmontant une couche de transmission 10. De préférence, et comme illustré, le diffuseur 3 comprend également un substrat 11 transparent supportant la couche de transmission 10 et la couche de diffusion 22.

De manière uniquement optionnelle, et comme cela sera décrit par la suite, le diffuseur 3 peut possiblement comprendre une couche de polarisation 30. De préférence, cette couche de polarisation 30 est disposée entre le substrat 11 et la couche de transmission 10. Les faces de chacune de ces couches s'étendent principalement selon des plans parallèles entre eux et parallèle au plan d'extension principal xy du repère orthogonal xyz illustré en figure 2A.

Le diffuseur 3 présente notamment un côté destiné à être en regard de la source de lumière (non illustrée), et un côté opposé destiné à être en regard d'un observateur. Typiquement, la face 302 illustrée en figure 2A est destinée à être tournée en regard de la source de lumière et la face 301 est destinée à être tournée en regard de l'observateur.

Dans cet exemple illustré à la figure 2A, la couche de polarisation 30 est située entre la couche de transmission 10 et la source. De préférence, la couche de diffusion 22 est située entre la couche de transmission 10 et l'observateur.

Cette couche de transmission 10 est en un matériau transparent dans le visible, en particulier aux longueurs d'onde de la lumière à transmettre. Ce matériau transparent peut être à base d'oxyde de silicium, de nitrure de silicium, de saphir.

La couche de transmission 10 peut former un support transparent pour la couche de diffusion 22 du diffuseur.

La couche de diffusion 22 comprend une pluralité de nanostructures métalliques 200, également désignée nanoparticules ou particules. Ces nanostructures métalliques 200 sont distinctes les unes des autres. Elles sont ainsi séparées les unes des autres.

Au moins certaines nanostructures, de préférence chaque nanostructure s'apparente à une particule métallique allongée, en projection dans le plan d'extension principal xy parallèle aux faces de la couche transmission 10. Ainsi une nanostructure présente notamment une dimension longitudinale ou longueur L définie par sa dimension maximale d'extension. Cette dimension longitudinale s'étend selon un axe désigné axe longitudinal ou grand axe pour cette nanostructure. La nanostructure présente également une dimension transverse ou largeur l qui correspond à la plus grande dimension de la nanostructure prise selon un axe perpendiculaire à l'axe longitudinal. Cette dimension transverse s'étend selon un axe, dit axe transversal ou petit axe. Des exemples de longueur L et de largeur l sont illustrés en figure 2B.

La dimension transversale (largeur) est inférieure à la dimension longitudinale (longueur) de la nanostructure.

De préférence, toutes les nanostructures métalliques présentent une dimension transversale inférieure à leur dimension longitudinale. Néanmoins, on peut prévoir que, au sein de la couche de diffusion 22, certaines nanostructures ne soient pas allongées et ne répondent pas à cette définition.

De préférence $L \geq k * l$, avec k = 1.5 et de préférence k=2 et de préférence k=3.

De préférence, la dimension transversale l, c'est-à-dire la largeur l des nanostructures est inférieure à 650 nm. Cette largeur est en particulier inférieure aux longueurs d'onde d'intérêt de la lumière à diffuser. Selon une possibilité, la longueur L des nanostructures est également inférieure aux longueurs d'onde de la lumière à diffuser.

Les nanostructures 200 peuvent présenter une largeur l comprise entre 50 nm et 500 nm, et une longueur L comprise entre 200 nm et 2 $\mu$m. Elles peuvent présenter une hauteur h comprise entre 100 nm et 500 nm.

Ces nanostructures 200 peuvent présenter, en projection dans le plan d'extension principal xy, différentes formes, par exemple des formes ellipsoïdales telles que représentées à la figure 2B, oblongues ou rectangulaires, ou toute autre forme présentant un grand axe et un petit axe (par exemple un losange). Ces formes sont de préférence identiques entre elles.

Ces nanostructures métalliques 200 sont réparties sur la couche de transmission 10 de façon aléatoire ou désorganisée (figure 2B). En particulier, les grands axes respectifs de ces nanostructures sont dirigés selon une pluralité de directions non parallèles, dans le plan d'extension principal xy.

Lors du fonctionnement du diffuseur, l'orientation des nanostructures ne varie pas. Les nanostructures sont fixes lors du fonctionnement. Elles sont typiquement fixées à la couche de transmission sous-jacente ou encapsulées dans une couche d'encapsulation. Une telle couche d'encapsulation n'est pas liquide ou visqueuse. Elle est typiquement rigide.

Pour chaque nanostructure, la direction de son grand axe définit « l'orientation » de cette nanostructure. Chaque nanostructure présente typiquement une seule orientation.

Dans le cas d'une distribution d'orientations des nanostructures étroite ou gaussienne la formation d'un réseau ordonné de nanostructures est favorisée. Un réseau ordonné présente un degré d'ordre élevé qui favorise certaines interactions avec l'onde incidente de la lumière émise par la source (par exemple par résonance). C'est ce qui est appelé dans la suite « effet de réseau ». En conséquence, la lumière est extraite via ce réseau ordonné selon certaines directions privilégiées seulement. Dans ce cas, la diffusion n'est pas isotrope.

Au contraire, une distribution d'orientations des nanostructures étalée favorise la formation d'un réseau désordonné de nanostructures. Un réseau désordonné présente un degré d'ordre faible qui limite, voire qui élimine, l'effet de réseau. En conséquence, la lumière est extraite via ce réseau désordonné de façon plus isotrope. L'isotropie de la diffusion est améliorée en utilisant un tel réseau désordonné.

Selon une possibilité avantageuse, la distribution d'orientations des nanostructures 200 est de préférence la plus étalée possible. Par exemple, chacune des nanostructures de la pluralité de nanostructures métalliques a au moins une nanostructure métallique adjacente présentant une orientation différente de celle de la nanostructure considérée. Selon une possibilité, seule les orientations des nanostructures sont variées, et les positions de chacun des barycentres de ces nanostructures sont situées sur les nœuds d'un réseau ordonné.

Selon une possibilité préférée, les distances entre les barycentres de ces nanostructures sont de préférence également variées, de façon à réduire l'effet de réseau et à améliorer en conséquence l'isotropie de la diffusion. Selon un exemple, les nano structures ne forment pas un réseau périodique ou régulier, ou ne sont pas distribuées selon un réseau périodique ou régulier.

Selon un exemple, les axes longitudinaux des nanostructures adjacentes ne sont pas parallèles. Selon un exemple, pour chaque nanostructure, l'axe longitudinal de cette nanostructure n'est pas parallèle avec les axes longitudinaux des nanostructures qui lui sont adjacentes. Selon un exemple, moins de 5% des nanostructures ont un axe longitudinal qui est parallèle à l'une des nanostructures qui lui sont adjacentes.

De préférence l'angle $\alpha$ formé par les axes longitudinaux de deux nanostructures métalliques adjacentes est d'au moins 40° et de préférence d'au moins 60°.

Selon une possibilité, les nanostructures 200 peuvent présenter des tailles variées. Par exemple, les nanostructures 200 peuvent présenter des longueurs L et/ou des largeurs I variées. De manière alternative ou combinée, les nanostructures 200 d'une même couche de diffusion 22 peuvent présenter des formes variées. Cela permet également de réduire l'effet de réseau et d'améliorer l'isotropie de la diffusion.

La réalisation d'une telle couche de diffusion 22 peut avantageusement se faire par des technologies planaires standard de la microélectronique (dépôt, lithographie, gravure), comme exposé plus loin dans la description.

Elle peut être alternativement réalisée par une simple étape de dépôt de nanoparticules métalliques présentant les caractéristiques de tailles et de formes mentionnées ci-dessus. Ce dépôt peut se faire à partir de solutions colloïdales de nanoparticules métalliques, par dépôt gravitaire et/ou par des techniques d'électrodéposition ou d'électrophorèse bien connues permettant d'obtenir une couche de nanostructures orientées aléatoirement.

Bien que les nanostructures 200 soient configurées et disposées de façon à limiter au maximum l'effet de réseau, certaines directions privilégiées de diffusion peuvent néanmoins subsister. De telles directions privilégiées forment la signature angulaire de la diffusion.

Afin d'éliminer cette signature angulaire et d'améliorer l'isotropie de la diffusion, le diffuseur 3 prévoit avantageusement une couche de polarisation 30 destinée à polariser et à moduler la polarisation de la lumière émise par la source, avant diffusion de cette lumière polarisée par les nanostructures de la couche de diffusion 22.

Selon une possibilité, cette couche de polarisation 30 comprend successivement, en partant du côté source, un polariseur puis un dispositif de modulation dynamique de la polarisation.

Le polariseur situé du côté de la source permet de polariser la lumière émise par la source. Une telle lumière polarisée peut ensuite être modulée plus efficacement par le dispositif de modulation qu'une lumière non polarisée.

Le dispositif de modulation dynamique est de préférence à base d'un cristal liquide ou de cristaux liquides. De façon connue, un cristal liquide présente des propriétés anisotropes. Les molécules qui le composent présentent notamment un petit axe et un grand axe, et leur grand axe peut être sensiblement orienté selon une direction moyenne (état nématique). En particulier, la permittivité électrique anisotrope desdites molécules permet de les faire pivoter et de les orienter sous l'action d'un champ électrique. Leur propriété de réfraction anisotrope ou biréfringence (indice de réfraction ordinaire pour une lumière polarisée selon le petit axe et indice de réfraction extraordinaire pour une lumière polarisée selon le grand axe) permet en outre de modifier l'état de polarisation de la lumière traversant le cristal liquide. Ainsi, en faisant varier le champ électrique appliqué au cristal liquide, il est possible de faire varier la polarisation de la lumière traversant ce cristal liquide.

Tel qu'illustré aux figures 3A, 3B, un cristal liquide 300 peut donc être avantageusement disposé au sein d'une cavité dans la couche de polarisation 30, entre deux plaques 31, 32, de façon à former le dispositif de modulation. En l'absence de champ électrique appliqué à ce cristal liquide, les molécules du cristal liquide 300 présentent une première orientation 300a (figure 3A). En présence d'un champ électrique appliqué à ce cristal liquide, les molécules du cristal liquide 300 présentent une deuxième orientation 300b (figure 3B). La lumière polarisée par le polariseur peut donc subir une modification de sa polarisation en traversant le cristal liquide selon l'orientation 300a, 300b des molécules de ce cristal liquide 300.

En modulant le champ électrique appliqué à ce cristal liquide, l'état de polarisation de la lumière le traversant varie dynamiquement. Si la fréquence de modulation f est suffisamment rapide, en particulier si elle est supérieure au seuil de persistance rétinienne d'environ 24 Hz, cette modulation de l'état de polarisation n'est pas détectée par l'observateur. En revanche, cette modulation de l'état de polarisation permet avantageusement d'effacer ou de flouter les directions privilégiées de diffusion de la lumière par les nanostructures 200, pour l'observateur.

Celui-ci observera alors, par effet de moyennage, une diffusion présentant une isotropie améliorée, sans signature angulaire marquée.

Selon un mode de réalisation, le cristal liquide est disposé entre deux plaques 31, 32 horizontales parallèles. Ces plaques 31, 32 comprennent de préférence chacune un empilement comprenant une couche d'orientation du cristal liquide, par exemple du polyimide frotté, au contact du cristal liquide, et une électrode sous forme de couche conductrice transparente, par exemple en ITO (Indium Tin Oxyde). Les couches d'orientation permettent d'orienter les molécules selon une direction de référence dans le plan d'extension principal. Les électrodes permettent d'appliquer un champ électrique au cristal liquide et d'orienter les molécules selon une direction de ce champ électrique. Les électrodes constituent des moyens de connexion entre la couche de polarisation comprenant le dispositif de modulation à cristal liquide et un système de modulation apte à générer un champ électrique variable.

La plaque destinée à être du côté de la source (ici la plaque 32) peut en outre être associée à un polariseur ayant de préférence un angle de polarisation de 45 ° par rapport à la direction de référence. Dans ce cas la lumière émise par la source traverse le polariseur et acquiert une polarisation de 45° vis-à-vis des molécules de cristal liquide. Cette lumière polarisée va subir un changement de polarisation par rotation en traversant le cristal liquide, sous l'effet de la biréfringence du cristal liquide. Cette rotation de polarisation $\Delta\Phi$ va dépendre de l'épaisseur e de cristal liquide traversé, soit en pratique la distance séparant les deux plaques, et de l'écart $\Delta n$ entre indices de réfraction ordinaire et extraordinaire du cristal liquide. Il est alors possible de choisir le cristal liquide (notamment sa biréfringence) et son épaisseur pour fixer l'amplitude maximale de la rotation de polarisation $\Delta\Phi$. Dans la présente invention, une rotation de polarisation $\Delta\Phi$ comprise entre 15° et 90° est préférée.

Pour effectuer une telle rotation de polarisation, des cristaux liquides standards présentant un écart $\Delta n$ typiquement compris entre 0,1 et 0,3 peuvent convenir. L'épaisseur e peut être déterminée à partir de la loi du retard :

$$e = (2.\Delta\Phi.\lambda)/(2\pi.\Delta n)$$

où $\lambda$ est la longueur d'onde d'intérêt de la lumière à polariser.

Pour une longueur d'onde de 0.6 $\mu$m, une épaisseur e de 0.5 $\mu$m permet d'obtenir 15 degrés de rotation de polarisation, et une épaisseur e de 3 $\mu$m permet d'obtenir 90 ° degrés de rotation de polarisation. L'épaisseur e de cristal liquide est donc de préférence comprise entre 0.5 $\mu$m et 3 $\mu$m.

En l'absence de tension électrique entre les plaques 31, 32, les molécules de cristal liquide sont orientées parallèlement à la direction de référence, tel qu'illustré en figure 3A. Dans ce cas la lumière polarisée à 45° dans le plan d'extension principal traversant le cristal liquide selon une direction de propagation sensiblement normale aux plaques subit une réfraction anisotrope. Sa polarisation subit une rotation en traversant le cristal liquide. La polarisation initiale de la lumière est ainsi modifiée avant que la lumière ne soit diffusée par la couche de diffusion. La lumière est ainsi diffusée selon un premier mode de diffusion.

En appliquant une tension typiquement de l'ordre de 4 à 6 volts entre les électrodes via le système de modulation, les molécules de cristal liquide vont s'orienter parallèlement au champ électrique, notamment selon la direction z normale aux plaques, tel qu'illustré en figure 3B. Dans ce cas la lumière polarisée traversant le cristal liquide selon la direction de propagation ne subit pas de réfraction anisotrope. Sa polarisation ne subit pas de rotation en traversant le cristal liquide. La lumière conserve ainsi sa polarisation initiale avant d'être diffusée par la couche de diffusion. La lumière est ainsi diffusée selon un deuxième mode de diffusion.

En modulant périodiquement la tension entre les électrodes via le système de modulation, à la fréquence de modulation f telle que 20 Hz < f < 200 Hz, et de préférence f > 24 Hz, la diffusion par la couche de diffusion de la lumière polarisée va osciller entre les deux modes de diffusion, selon une pluralité de modes de diffusion. Cette oscillation de la diffusion entre une pluralité de modes de diffusion va générer de façon dynamique une diffusion moyenne. Cette diffusion moyenne est avantageusement isotrope pour un observateur.

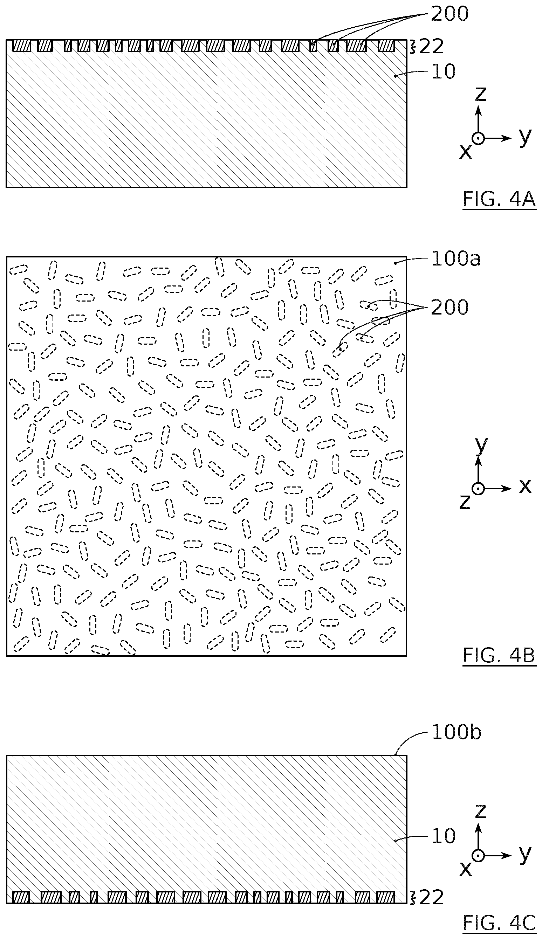

Un procédé de réalisation d'un tel diffuseur est décrit dans la suite en référence aux figures 4A à 4I.

Avantageusement, les moyens de fabrication standards de la microélectronique peuvent être mis en œuvre.

Sur une couche de transmission 10 transparente dans le visible (figure 4A), par exemple en verre, une couche de métal est déposée puis structurée de façon à former les nanostructures métalliques 200 du diffuseur. Cette couche de métal présente de préférence une épaisseur de l'ordre de 100 nm à 500 nm. Elle peut être en Aluminium. Une telle couche est avantageusement compatible avec les technologies CMOS de la microélectronique. En outre, l'aluminium présente de faibles pertes par absorption. La transmission totale d'un diffuseur à base de nanostructures en aluminium est optimisée.

La couche d'aluminium est ensuite structurée de façon connue par lithographie (UV ou faisceau d'électrons) et gravure (RIE par exemple).

Cela permet de former des nanostructures 200 de forme allongée, orientées et/ou réparties de façon aléatoire sur la couche de transmission 10. Ces nanostructures 200 sont de préférence distribuées sur toute une face avant 100a de la couche de transmission 10 du diffuseur (figure 4B). La couche de diffusion 22 du diffuseur est ainsi formée, de façon simple et en un minimum d'étapes technologiques.

De façon optionnelle, une étape de planarisation peut également être réalisée.

Cette étape de planarisation comprend par exemple un dépôt d'un matériau transparent, par exemple à base de silice, au moins entre les nanostructures 200. Un polissage, par exemple par CMP (Chemical Mechanical Polishing) peut également être réalisé lors de cette étape de planarisation. Cela permet d'obtenir une couche de diffusion 22 présentant un état de surface compatible avec d'éventuelles étapes technologiques ultérieures. Une telle couche de diffusion 22 présente en outre une tenue mécanique améliorée.

La couche de polarisation 30 comprenant le polariseur et le système de modulation à base de cristaux liquides est ensuite formée en face arrière 100b de la couche de transmission 10.

La couche de transmission 10 supportant la couche de diffusion 22 est de préférence retournée afin d'exposer la face arrière 100b (figure 4C). De façon optionnelle, une couche de protection temporaire peut être déposée sur les nanostructures métalliques de la couche de diffusion 22 (non illustré), de manière à les protéger lors des étapes suivantes de fabrication du diffuseur.

Une première couche conductrice transparente 311, par exemple en ITO (Indium Tin Oxyde), peut ensuite être déposée sur la face arrière 100b, de façon à former une première électrode du dispositif de modulation. Un recuit optionnel peut être effectué de manière à diminuer la résistivité électrique et à augmenter la transparence de cette première couche conductrice transparente 311.

Une première couche d'orientation 310, par exemple en polyimide frotté, peut ensuite être déposée sur la première couche conductrice transparente 311, de façon à former une première couche d'orientation du cristal liquide du dispositif de modulation. Cette première couche d'orientation 310 peut être réalisée en déposant du polyimide par centrifugation. Ce polyimide est ensuite recuit, puis frotté, de manière à former des stries selon une direction correspondant à la direction de référence pour l'orientation du cristal liquide.

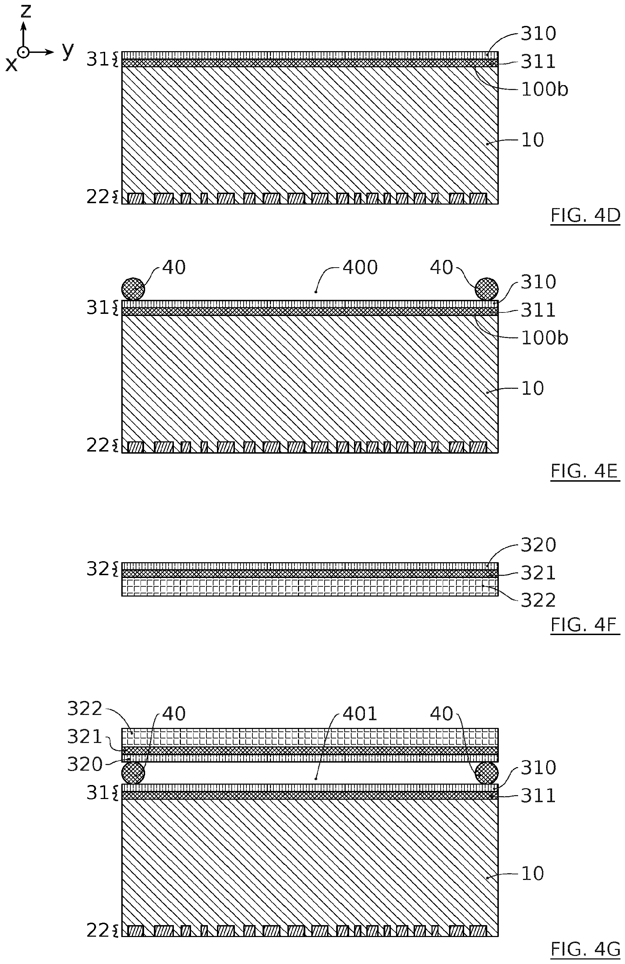

La première couche conductrice transparente 311 et la première couche d'orientation 310 forment une première plaque 31 du dispositif de modulation (figure 4D).

Afin de former la cavité destinée à être remplie par le cristal liquide, un cordon de scellement 40 peut être déposé sur le pourtour de la première plaque 31 (figure 4E). Selon une possibilité, des espaceurs transparents peuvent être disposés dans l'espace 400 délimité par le cordon de scellement 40 (non illustré). De façon connue, ces espaceurs permettent de maintenir une distance de séparation constante entre les plaques 31, 32 en regard l'une de l'autre. Cette distance de séparation correspond à l'épaisseur e de cristal liquide après remplissage de la cavité du dispositif de modulation. Les espaceurs permettent également de renforcer mécaniquement le dispositif de modulation.

La deuxième plaque 32 du dispositif de modulation peut être réalisée à part, puis assemblée à la première plaque 31 via le cordon de scellement 40. La deuxième plaque 32 est par exemple réalisée de la même manière que la première plaque 31, en déposant sur une plaque de verre 322 une deuxième couche conductrice transparente 321, par exemple en ITO (Indium Tin Oxyde). Une deuxième couche d'orientation 320, par exemple en polyimide frotté, peut ensuite être déposée sur la deuxième couche conductrice transparente 321 (figure 4F). Les traitements (recuit, frottement) éventuellement appliqués lors de la formation de la première plaque 31 peuvent également être appliqués lors de la formation de la deuxième plaque 32.

Cette deuxième plaque 32 préparée à part est ensuite retournée et alignée vis-à-vis de la première plaque 31, de façon à ce que les première et deuxième couches d'orientation 310, 320 soient en regard l'une de l'autre (figure 4G). La deuxième plaque 32 est assemblée à la première plaque 31 via le cordon de scellement 40. La cohésion de l'assemblage est assurée par exemple par une colle dont l'indice de réfraction ne perturbe pas le fonctionnement du dispositif de modulation de la couche de polarisation. Cette colle peut être par exemple une colle UV.

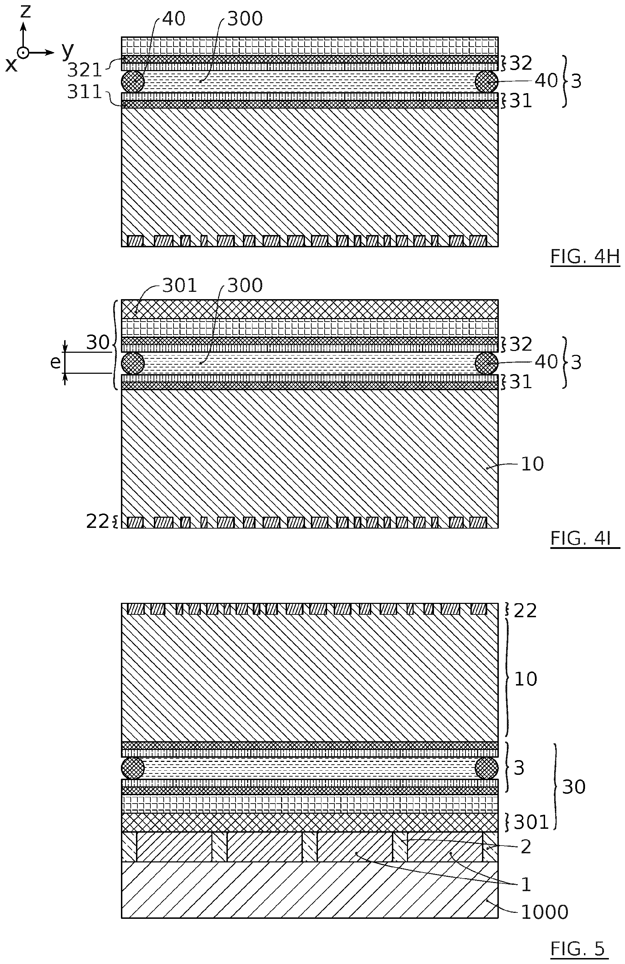

Les première et deuxième plaques 31, 32 assemblées via le cordon de scellement 40 forment une cavité 401 destinée à être remplie par le cristal liquide. De façon connue, une ouverture est pratiquée au travers du cordon de scellement ou de la deuxième plaque afin de former un passage vers la cavité 401. La cavité 401 est ensuite remplie par le cristal liquide 300 au travers de ce passage. Un bouchon est ensuite posé dans le passage afin de fermer la cavité ainsi remplie par le cristal liquide 300 (figure 4H). Le dispositif de modulation 3 est ainsi créé sur la face arrière de la couche de transmission 10, en regard de la couche de diffusion 22. Celui-ci est configuré pour être connecté ultérieurement au système de modulation via les électrodes 311, 321. Cette connexion peut se faire aisément par un coté du dispositif de modulation 3.

Un polariseur 301 peut ensuite être associé à la deuxième plaque 32, au niveau de la plaque en verre 322. Ce polariseur peut être assemblé ou formé par dépôt de couche polarisante. La couche de polarisation 30 comprenant le dispositif de modulation 3 à base de cristal liquide 300 et le polariseur 301 est ainsi formée (figure 4I).

La présente invention concerne également un système associant au moins une source de lumière, de préférence une pluralité de sources de lumière ponctuelles, à au moins un diffuseur tel que décrit au travers des exemples de réalisation précédents.

Un diffuseur comprenant une couche de diffusion 22, une couche de transmission 10, une couche de polarisation 30 comprenant un polariseur 301 et un dispositif de modulation 3 à base de cristal liquide 300, tel qu'illustré à la figure 4I, peut notamment être agencé en regard de sources de lumière ponctuelles 1, par exemple des LED (figure 5).

Les LED 1 peuvent être séparées entre elles par des structures 2 d'isolation et/ou d'injection électrique.

Elles sont de préférence commandées indépendamment les unes des autres par une matrice de commande 1000, intégrant par exemple des composants CMOS (Complementary Metal Oxide Semiconductor).

Ces LED 1 forment par exemple les pixels ou les sous-pixels d'un écran d'affichage.

L'assemblage entre le diffuseur et la pluralité de sources ponctuelles 1 peut se faire par couplage classique avec alignement, par exemple à l'aide d'une machine d'hybridation dite « Die-to-wafer ».

La cohésion de l'assemblage est assurée par exemple par une colle dont l'indice de réfraction ne perturbe pas le fonctionnement de la couche de polarisation. Cette colle peut être par exemple une colle UV.

Le système selon l'invention associant une pluralité de sources de lumière ponctuelles à au moins un diffuseur trouve pour application avantageuse la réalisation d'écrans d'affichage à trois dimensions (3D).

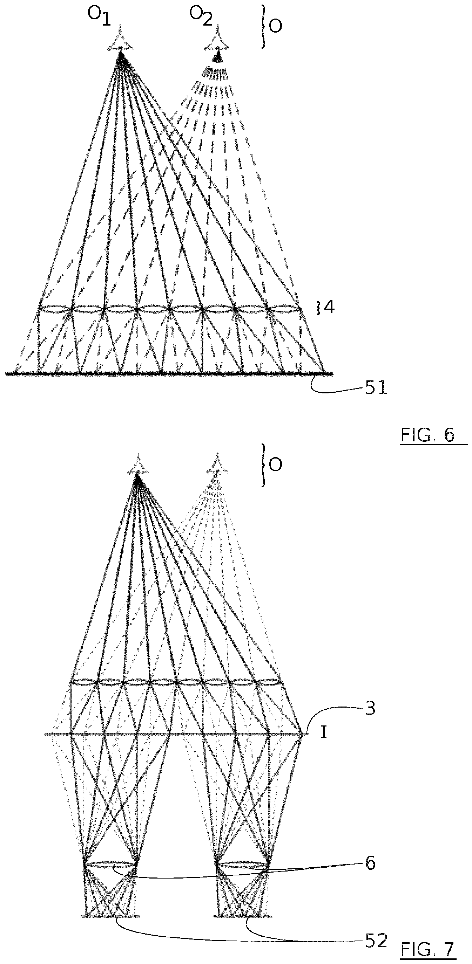

De tels écrans d'affichage 3D sont conçus de sorte à afficher des images légèrement différentes suivant l'angle de vue. En particulier, pour donner une perception tridimensionnelle à un observateur O, il faut que chacun de ses deux yeux voient deux images légèrement différentes par exemple en termes de luminosité et/ou de couleur (figure 6).

De façon connue, un écran 3D peut être réalisé en combinant une matrice de microlentilles 4 et un écran 51 à très haute résolution, tel qu'illustré à la figure 6. Dans une telle configuration, l'observateur O voit l'écran 51 haute résolution au travers de la matrice de microlentilles 4. En particulier, le premier œil de l'observateur O1 voit au travers de la matrice de microlentilles une première série de petites zones de l'écran haute résolution, formant une première image. Le deuxième œil de l'observateur O2 voit au travers de la matrice de microlentilles une deuxième série de petites zones de l'écran haute résolution, formant une deuxième image. Ces première et deuxième séries sont entrelacées au sein de l'écran 51 haute résolution.

Pour que l'observateur O puisse se placer arbitrairement dans une position donnée devant l'écran 3D, le système génère des images différentes pour une multitude de points de vue situés les uns à côté des autres. On appelle couramment « vues » (views en anglais), ces points de vue. À une position donnée par rapport à l'écran 3D, les yeux O1, O2 de l'observateur sélectionnent deux vues différentes qui, en se combinant, donnent une perception tridimensionnelle à l'observateur. Lorsque celui-ci déplace sa tête par rapport à l'écran 3D, cette sélection change, ce qui augmente encore la perception 3D.

En pratique, les petites zones des différentes séries correspondent à des pixels de l'écran 51 à très haute résolution. Ces pixels forment des sources de lumière ponctuelles. Ils peuvent être constitués par une ou plusieurs LED 1 par exemple. Le nombre de pixels de l'écran à très haute résolution est dans le cas d'une application à l'affichage 3D le produit du nombre de microlentilles 4 (correspondant à la résolution nominale de l'écran 3D perçue par l'observateur) par le nombre de vues (correspondant aux placements possibles de l'observateur vis-à-vis de l'écran 3D). Pour une même résolution nominale, le nombre de pixel nécessaires à la réalisation d'un écran 3D est donc très supérieur à celui d'un écran 2D, du fait du nombre de vues. Un tel système requiert donc d'utiliser un écran 51 interne de très haute résolution, pour obtenir in fine la résolution nominale souhaitée en affichage 3D. Un écran 51 à très haute résolution présente typiquement une densité de pixels supérieure ou égale à 500 ppi (acronyme de « pixels per inch » ou pixels par pouce en français), et/ou un pas de pixel inférieur ou égal à 50 μm. Un écran 51 à très haute résolution présente typiquement un nombre de pixels supérieur ou égal à 10 Mp (mégapixels, soit 10$^6$ pixels).

Cet écran 51 interne de très haute résolution entremêlant une pluralité d'images associées au nombre de vues souhaitées peut être réalisé ou remplacé par une pluralité de micro-écrans 52 internes diffusant chacun une partie des images requises. Dans ce cas, chacun des micro-écrans 52 est associé à un système de projection 6. La figure 7 illustre un tel système associant des micro-écrans 52 et des systèmes de projection 6. Par souci de clarté, seuls deux micro-écrans 52 et deux systèmes de projection 6 sont illustrés sur cette figure 7.

Pour que les rayons lumineux issus des bords d'un micro-écran 52 soient dirigés en direction de l'observateur O, il est nécessaire de placer un diffuseur dans le plan image I conjugué au plan dans lequel se trouve le micro-écran 52.

Un tel diffuseur doit être efficace à l'échelle des pixels de l'écran 51 à très haute résolution ou des pixels de la pluralité de micro-écrans 52. Ces pixels présentent typiquement une taille d'environ 15 μm. Le diffuseur décrit dans la présente invention permet avantageusement d'obtenir l'efficacité requise dans le cadre de cette application pour l'affichage 3D.

Dès lors, un système selon l'invention comprenant :

    a. un écran 51 à très haute résolution constitué d'une pluralité de micro-écrans 52 comprenant chacun une pluralité de pixels,
    b. une pluralité de systèmes de projection 6 associée à la pluralité de micro-écrans 52,
    c. au mois un diffuseur tel que décrit par la présente invention, associé à chaque pixel des pluralités de pixels des micro-écrans 52, et
    d. une matrice de microlentilles 4, est particulièrement avantageux pour l'affichage 3D.

Un exemple de dimensionnement d'un tel système est décrit ci-après.

Pour une taille d'écran 3D de 195 mm x 150 mm de diagonale 246 mm (9,6 pouces) affichant une résolution de 1300 x 1000, le pas perçu par l'utilisateur est de 150μm (ce qui correspond à la taille d'une microlentille 4 de la matrice de microlentilles). Pour obtenir 10X10 vues, l'écran 51 à très haute résolution doit alors avoir 13000 x 10000 pixels, au pas de 15 μm. Chaque pixel présente ainsi une taille d'environ 15μm.

L'écran 51 à très haute résolution peut être réalisé en pratique en assemblant 5 x 5 micro-écrans 52 ayant chacun 2600 x 2000 pixels. De tels micro-écrans 52 sont par exemple commercialisés par la société microOLED.

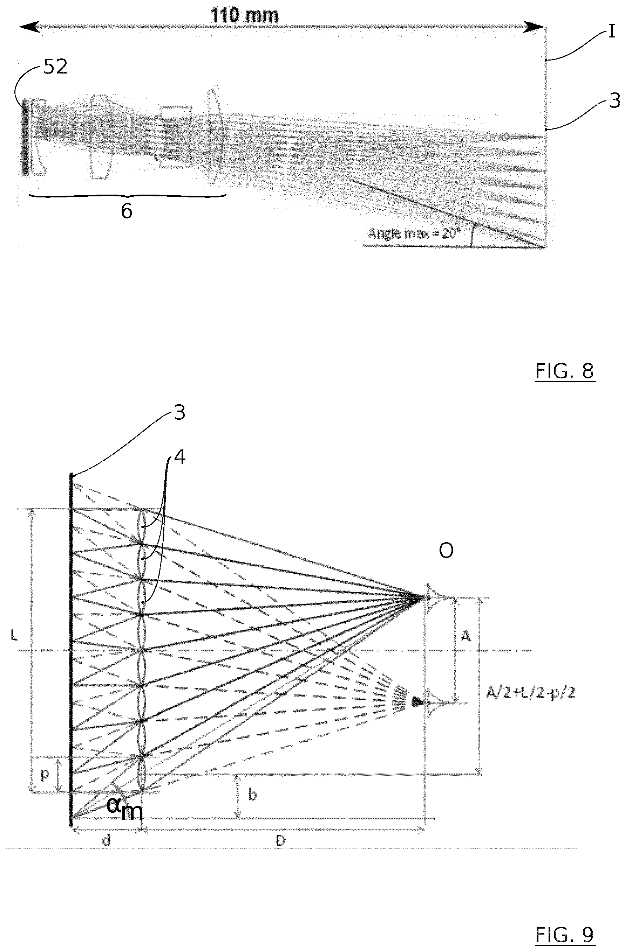

Le système de projection 6 peut être réalisé selon le design optique illustré à la figure 8. Il permet par exemple de former une image du micro-écran 52 sur un plan image I situé à 110 mm du micro-écran 52. L'angle d'incidence β maximal est dans ce cas d'environ 20° par rapport à la normale au plan image I. Le diffuseur selon l'invention peut transmettre efficacement une lumière incidente présentant un tel angle d'incidence β de l'ordre de 20°.

L'image formée sur le plan image I est alors diffusée par le diffuseur puis focalisée par la matrice de microlentilles 4.

Tel qu'illustré à la figure 9, pour un écran de largeur L et pour un observateur situé à une distance D ayant des yeux espacés de A, l'angle maximal $\alpha_m$ admissible par les microlentilles 4 peut être approximativement déterminé par :

$$tan\,\alpha_m \approx \frac{A + {}^L\!/_2}{D}$$

Soit, pour L = 195 mm (largeur typique d'une tablette), D = 50 cm (distance typique d'observation d'une tablette) et A = 10 cm, $\alpha_m \approx 21,5°$.

Les angles α et β sont de signes opposés. Le diffuseur est donc configuré de sorte à présenter un diagramme angulaire présentant un angle de diffusion maximal d'environ 40°. Le diffuseur selon l'invention permet d'obtenir un tel diagramme angulaire.

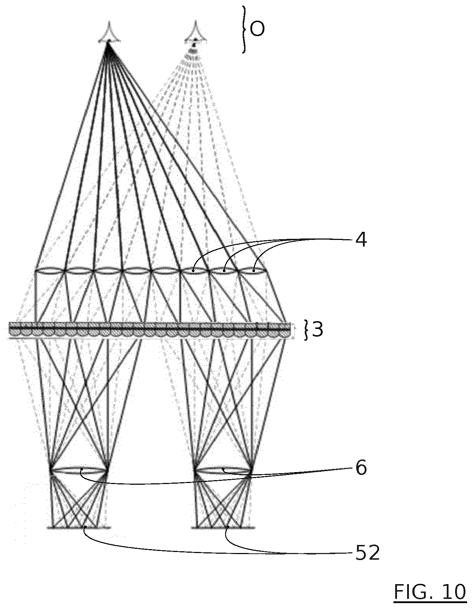

Un système d'affichage 3D fonctionnel et efficace peut donc être avantageusement réalisé en bénéficiant du diffuseur décrit dans la présente invention, tel qu'illustré à la figure 10.

L'invention n'est pas limitée aux modes de réalisations précédemment décrits et s'étend à tous les modes de réalisation couverts par les revendications.

## Revendications

1.   Diffuseur (3) destiné à recevoir de la lumière émise par une source de lumière (1) visible comprenant une couche de transmission (10) et une couche de diffusion (22) destinée à diffuser ladite lumière, le diffuseur (3) étant **caractérisé en ce que** la couche de diffusion comprend une pluralité de nanostructures métalliques (200), chacune de ces nanostructures métalliques présentant, en projection dans un plan d'extension principal (xy) :

    - une dimension longitudinale (L) correspondant à la plus grande dimension de la nanostructure métallique (200) selon cette projection, la dimension longitudinale (L) s'étendant selon un axe longitudinal et,
    - une dimension transverse (l) prise selon un axe transverse perpendiculaire à l'axe longitudinal, la dimension transverse (l) étant inférieure à la dimension longitudinale (L) et étant inférieure à 650 nm,

    et **en ce que** ces nanostructures métalliques (200) sont en outre réparties au sein de la couche de diffusion (22) de sorte que les axes longitudinaux d'au moins deux nanostructures métalliques (200i, 200j) adjacentes sont non parallèles.

2. Diffuseur (3) selon la revendication précédente dans lequel les axes longitudinaux des nanostructures métalliques (200) sont orientés selon une pluralité d'orientations différentes dans le plan d'extension principal (xy).

3. Diffuseur (3) selon l'une quelconque des revendications précédentes dans lequel les dimensions longitudinale (L) et transverse (l) sont telles que $L \geq k * l$, avec k = 1.5.

4. Diffuseur (3) selon l'une quelconque des revendications précédentes dans lequel, pour au moins certaines des nanostructures métalliques (200$_i$, 200$_j$) adjacentes, les axes longitudinaux de ces nanostructures métalliques (200$_i$, 200$_j$) adjacentes forment un angle $\alpha$ d'au moins 40° et de préférence d'au moins 60°.

5. Diffuseur (3) selon l'une quelconque des revendications précédentes comprenant en outre au moins une couche de polarisation (30) configurée pour polariser la lumière émise par la source et destinée à être diffusée par la pluralité de nanostructures métalliques.

6. Diffuseur (3) selon la revendication précédente dans lequel la couche de polarisation (30) comprend un polariseur (301).

7. Diffuseur (3) selon l'une quelconque des deux revendications précédentes dans lequel la couche de polarisation (30) comprend un cristal liquide (300).

8. Diffuseur (3) selon l'une quelconque des trois revendications précédentes dans lequel la couche de polarisation (30) est configurée de sorte à moduler dynamiquement la polarisation de la lumière émise selon une fréquence de modulation.

9. Diffuseur (3) selon l'une quelconque des revendications précédentes dans lequel la dimension longitudinale (L) est comprise entre 200 nm et 2 $\mu$m, et la dimension transverse ($\ell$) est comprise entre 50 nm et 500 nm.

10. Diffuseur (3) selon l'une quelconque des revendications précédentes dans lequel les nanostructures métalliques (200) présentent, en projection dans le plan d'extension principal (xy), une forme prise parmi une ellipse et un rectangle, et présentent de préférence toutes la même forme.

11. Diffuseur (3) selon l'une quelconque des revendications précédentes dans lequel au moins une partie des nanostructures métalliques est en au moins un métal pris parmi l'aluminium, le tungstène, le cuivre, l'argent, l'or.

12. Système d'affichage comprenant au moins un diffuseur (3) selon l'une quelconque des revendications précédentes et au moins une source de lumière ponctuelle (1), dans lequel l'au moins un diffuseur (3) est configuré pour coopérer avec l'au moins une source de lumière ponctuelle (1) de façon à diffuser une lumière émise par celle-ci.

13. Système d'affichage selon la revendication précédente comprenant :

   - un écran (51), de préférence à très haute résolution, comprenant une pluralité de micro-écrans (52) comprenant chacun une pluralité de pixels,
   - une pluralité de systèmes de projection (6) associée à la pluralité de micro-écrans (52),
   - au moins un diffuseur (3) selon l'une quelconque des revendications 1 à 14, associé à au moins un pixel des pluralités de pixels des micro-écrans (52), et
   - une matrice de microlentilles (4) associée à l'au moins un diffuseur (3).

14. Procédé de fabrication d'un diffuseur (3) comprenant au moins une couche de diffusion (22) destinée à diffuser une lumière émise par une source de lumière (1) visible et comprenant une pluralité de nanostructures métalliques (200), ledit procédé comprenant les étapes suivantes :

   - Fournir une couche de transmission (10) en un matériau transparent à la lumière émise, et présentant une face avant (110a),
   - Former sur la face avant (110a) ladite pluralité de nanostructures métalliques (200), chacune de ces nanostructures métalliques présentant, en projection dans un plan d'extension principal (xy), une dimension longitudinale (L) correspondant à la plus grande dimension de la nanostructure métallique (200) selon cette projection, la dimension longitudinale (L) s'étendant selon un axe longitudinal, et une dimension transverse ($\ell$) prise selon un axe transverse perpendiculaire à l'axe longitudinal, la dimension transverse ($\ell$) étant inférieure à la dimension longitudinale (L) et étant inférieure à 650 nm, les nanostructures métalliques (200) étant en outre réparties au sein de la couche de diffusion (22) de sorte que les axes longitudinaux d'au moins deux nanostructures métalliques (200$_i$, 200$_j$) adjacentes sont non parallèles.

**15.** Procédé selon la revendication précédente comprenant en outre la formation d'une couche de polarisation (30) sur une face arrière (100b) de la couche de transmission (10), ladite couche de polarisation (30) étant configurée pour polariser la lumière destinée à être diffusée par les nanostructures métalliques.

FIG. 1A

FIG. 1B

FIG. 2A

FIG. 2B

FIG. 3A

FIG. 3B

200

22

10

z

x⊙ →y

FIG. 4A

100a

200

y

z⊙ →x

FIG. 4B

100b

z

10

x⊙ →y

22

FIG. 4C

FIG. 4D

FIG. 4E

FIG. 4F

FIG. 4G

FIG. 4H

FIG. 4I

FIG. 5

FIG. 6

FIG. 7

Angle max = 20°

FIG. 8

FIG. 9

FIG. 10

Europäisches
Patentamt

European
Patent Office

Office européen
des brevets

**RAPPORT DE RECHERCHE EUROPEENNE**

Numéro de la demande

EP 20 19 8214

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2010/095140 A2 (YISSUM RES DEV CO [IL]; MERCK PATENT GMBH [DE] ET AL.) 26 août 2010 (2010-08-26) | 1-12,14, 15 | INV. G02B5/02 B82Y20/00 |
| Y | * abrégé * * page 5, lignes 8 à 11 et lignes 19 à 24; page 15, ligne 12 à page 16, ligne 18; page 16, lignes 1 à 14; page 17, lignes 4 à 16 et lignes 18 à 21; page 17, lignes 26 à 30; page 17, ligne 30 à page 18, ligne 1; page 20, lignes 20 à 25 et lignes 26 à 29; page 21, lignes 1 à 7 et lignes 9 à 11; page 22, ligne 19 à page 23, ligne 13; page 23, lignes 7 à 20; page 23, ligne 26 à page 24, ligne 6, lignes 21 à 30; page 25, ligne 26 à page 26, ligne 24; page 27, ligne 19 à 27 * * figures 1-19 * ----- | 13 | |
| X | US 2005/218377 A1 (LAWANDY NABIL M [US]) 6 octobre 2005 (2005-10-06) * abrégé * * paragraphes [0002], [0004]-[0007], [0027]-[0029], [0033]-[0035], [0039]-[0043] * * figures 1-9 * ----- | 1,12,14 | |
| X | US 2013/181242 A1 (CHO DOO-HEE [KR]) 18 juillet 2013 (2013-07-18) | 1,12,14 | |
| Y | * abrégé * * paragraphes [0003], [0034]-[0037], [0072]-[0079], [0090]-[0093], [0100]-[0123], [0135]-[0137], [0139]-[0140] * * figures 1-15 * ----- -/-- | 13 | |

DOMAINES TECHNIQUES RECHERCHES (IPC)

G02B
B82Y
H01L
G02F
C09K

Le présent rapport a été établi pour toutes les revendications

| Lieu de la recherche | Date d'achèvement de la recherche | Examinateur |
|---|---|---|
| Munich | 2 février 2021 | Kienle, Philipp |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
....................................................................
& : membre de la même famille, document correspondant

EPO FORM 1503 03.82 (P04C02)

**EP 3 798 696 A1**

Europäisches Patentamt
European Patent Office
Office européen des brevets

**RAPPORT DE RECHERCHE EUROPEENNE**

Numéro de la demande

EP 20 19 8214

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2016/064813 A1 (UNIV CENTRAL FLORIDA RES FOUND [US]) 28 avril 2016 (2016-04-28) <br> * abrégé * <br> * page 1, deuxieme paragraphe; page 2, troisieme paragraphe; page 5, dernier paragraphe à page 6 troisieme paragraphe * <br> * figures 1-14 * <br> ----- | 1,12,14 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 2 février 2021 | Kienle, Philipp |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 19 8214

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-02-2021

| Document brevet cité au rapport de recherche | | | Date de publication | Membre(s) de la famille de brevet(s) | | | Date de publication |
|---|---|---|---|---|---|---|---|
| WO 2010095140 | A2 | | 26-08-2010 | EP | 2399160 | A2 | 28-12-2011 |
| | | | | JP | 5753796 | B2 | 22-07-2015 |
| | | | | JP | 6140142 | B2 | 31-05-2017 |
| | | | | JP | 2012518808 | A | 16-08-2012 |
| | | | | JP | 2015096964 | A | 21-05-2015 |
| | | | | KR | 20110128314 | A | 29-11-2011 |
| | | | | TW | 201037390 | A | 16-10-2010 |
| | | | | US | 2011299001 | A1 | 08-12-2011 |
| | | | | WO | 2010095140 | A2 | 26-08-2010 |
| US 2005218377 | A1 | | 06-10-2005 | US | 2005218377 | A1 | 06-10-2005 |
| | | | | WO | 2005103202 | A2 | 03-11-2005 |
| US 2013181242 | A1 | | 18-07-2013 | KR | 20130084848 | A | 26-07-2013 |
| | | | | US | 2013181242 | A1 | 18-07-2013 |
| WO 2016064813 | A1 | | 28-04-2016 | EP | 3210073 | A1 | 30-08-2017 |
| | | | | US | 2017322457 | A1 | 09-11-2017 |
| | | | | WO | 2016064813 | A1 | 28-04-2016 |

EPO FORM P0460

Pour tout renseignement concernant cette annexe : voir Journal Officiel de l'Office européen des brevets, No.12/82